# EUROPEAN PATENT APPLICATION

(11) **EP 4 585 305 A1**
(43) Date of publication of application: **16.07.2025**
(21) Application number: 23879453.1
(22) Date of filing: 24.08.2023
(51) Int. Cl.: B01J 23/42, B01D 53/94, B01J 23/63, B01J 35/56, F01N 3/10

(54) **EXHAUST GAS PURIFYING CATALYST, AND CATALYST BODY USING SAME**

(30) Priority: 18.10.2022 JP 2022166917
(71) Applicant: CATALER CORPORATION, Kakegawa-shi, Shizuoka 437-1492 (JP)
(72) Inventor: TANAKA, Eriko, Kakegawa-shi, Shizuoka 437-1492 (JP); TANI, Toshiki, Kakegawa-shi, Shizuoka 437-1492 (JP); OISHI, Shunsuke, Kakegawa-shi, Shizuoka 437-1492 (JP); TOGASHI, Hiromi, Kakegawa-shi, Shizuoka 437-1492 (JP); SATO, Masanao, Kakegawa-shi, Shizuoka 437-1492 (JP)
(74) Representative: Kramer Barske Schmidtchen Patentanwälte PartG mbB
(86) International application number: PCT/JP2023/030439
(87) International publication number: WO 2024/084800

(57) **Abstract**

An exhaust gas purifying catalyst whose oxidation activity after long exposure to high temperature is improved is provided. The exhaust gas purifying catalyst disclosed herein includes a parent material 30 including an alumina particle 32 and zirconia 34 that covers at least a part of a surface of the alumina particle 32, and a catalyst precious metal 40 carried by the parent material 30 and containing at least Pt. The average particle diameter of the zirconia 34 that is obtained by a focused ion beam scanning electron microscope is 50 nm or less. The mole ratio (ZrO₂/Pt) of the zirconia 34 to the Pt is 8 or more.

## Description

### [Technical Field]

The present invention relates to an exhaust gas purifying catalyst, and an exhaust gas purifying catalyst body using the same.

The present application claims priority based on Japanese Patent Application No. 2022-166917 filed on October 18, 2022, the entire contents of which application are incorporated herein by reference.

### [Background Art]

The exhaust gas emitted from an internal-combustion engine such as a vehicle engine includes toxic substances such as hydrocarbon (HC), carbon monoxide (CO), and nitrogen oxide (NOx). For efficient reaction and removal of these toxic substances from the exhaust gas, exhaust gas purifying catalysts have been used generally. In these exhaust gas purifying catalysts, a catalyst precious metal is carried in a parent material such as alumina (see Patent Literatures 1 and 2). For example, Patent Literature 1 describes an exhaust gas purifying catalyst in which zirconia and platinum (Pt) are carried in an alumina particle. According to Patent Literature 1, zirconia plays a role of a blocking material for suppressing the particle growth of Pt in the exhaust gas purifying catalyst described above; therefore, sintering of Pt is suppressed even after long exposure to the exhaust gas with high temperature and in particular, the decrease in oxidation activity to oxidize nitrogen monoxide (NO) can be suppressed.

### [Citation List]

### [Patent Literatures]

[Patent Literature 1] Japanese Patent Application Publication No. 2013-198879
[Patent Literature 2] Japanese Patent Application Publication No. 2006-198594

### [Summary of Invention]

In Example according to Patent Literature 1, the durability is evaluated with the oxidation activity after a thermal process at 800°C for 20 hours. However, considering the durability for a longer time, there is still room for improvement in the conventional art.

The present invention has been made in view of the above circumstances, and it is an object of the present invention to provide an exhaust gas purifying catalyst in which oxidation activity after long exposure to high temperature is improved.

The present inventors have considered to suppress the decrease in oxidation activity of a catalyst precious metal in a way different from Patent Literature 1. That is to say, the present inventors' earnest examination indicates that the catalyst precious metal tends to become an oxidized state with low activity in a lean atmosphere. On the other hand, the acid property of a carrier that carries the catalyst precious metal has an influence on an electron state of the catalyst precious metal. Therefore, the present inventors have considered that the catalyst precious metal can be kept in an electron-rich state (metal state) with the high activity when the acid property of alumina is changed to increase the number of acid sites, and thus the decrease in oxidation activity of the catalyst precious metal can be suppressed even after the endurance. One method to increase the number of acid sites of alumina is to add zirconia. However, since the acid site is estimated to be generated at an interface between alumina and zirconia, it is necessary that miniaturized zirconia be disposed on a surface of alumina.

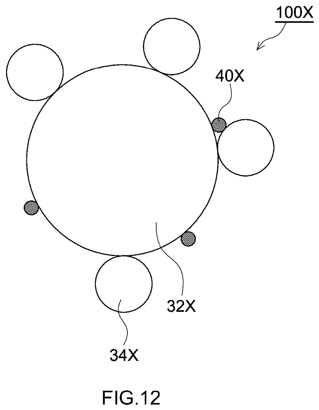

However, as illustrated in FIG. 12, in a conventional exhaust gas purifying catalyst 100X as described in Patent Literatures 1 and 2, zirconia 34X disposed on a surface of alumina 32X has an average particle diameter (secondary particle diameter) of about 100 nm or more and for example 100 to 1000 nm due to, for example, a manufacturing method. In this manner, in the conventional art, the particle diameter of the zirconia 34X is large and the number of interfaces between alumina and zirconia is small; therefore, according to the present inventors' investigation, the effect of increasing the number of acid sites of the alumina 32X is not obtained. Based on such knowledge, the present inventors have considered that when the average particle diameter of the zirconia 34X is made smaller than before to increase the number of contact points between the alumina 32X and the zirconia 34X, the number of acid sites of alumina 32X is increased and in this case, a catalyst precious metal 40X can be easily kept in the metal state and in the end, the decrease in oxidation activity can be suppressed at a higher level. The present invention has been created accordingly.

The present invention provides an exhaust gas purifying catalyst [1] including: a parent material including an alumina particle and zirconia that covers at least a part of a surface of the alumina particle; and a catalyst precious metal carried by the parent material and containing at least Pt, in which an average particle diameter of the zirconia that is obtained by a focused ion beam scanning electron microscope is 50 nm or less, and a mole ratio (ZrO₂/Pt) of the zirconia to the Pt is 8 or more.

In the exhaust gas purifying catalyst [1], zirconia that is miniaturized more than before is contained by a predetermined mole ratio or more. Thus, zirconia can be disposed on the surface of the alumina particle in a highly dispersive manner more than before, and the number of contact points between the alumina particle and zirconia can be increased. As a result, the number of acid sites of alumina can be increased and the catalyst precious metal (Pt in particular) can be kept in the metal state (active state). Therefore, according to the present invention, even after long exposure to high temperature, the decrease in oxidation activity can be suppressed at the higher level than before and the excellent exhaust gas purifying performance (for example, CO purifying performance) can be exerted.

An exhaust gas purifying catalyst [2] is the exhaust gas purifying catalyst [1] in which when quantitative line analysis of Zr is performed using a field emission electron probe micro-analyzer from the surface of the alumina particle toward a center and a depth from the surface to the center is expressed with the surface defined as 0% and the center defined as 100%, a peak top of Zr intensity is within a range of 0 to 30%. Thus, the ratio of zirconia existing on the surface of the alumina particle increases and the number of acid sites on the surface of alumina can be effectively increased. Therefore, the effect of the art disclosed herein can be achieved at the higher level.

An exhaust gas purifying catalyst [3] is the exhaust gas purifying catalyst [1] or [2], in which a mass ratio of the zirconia in the parent material is 5 mass% or more and 30 mass% or less. Thus, the number of acid sites on the surface of alumina can be increased more effectively and the effect of the art disclosed herein can be achieved at the higher level.

An exhaust gas purifying catalyst [4] is any one of the exhaust gas purifying catalysts [1] to [3], in which the mole ratio (ZrO₂/Pt) is 30 or less. Thus, the ratio of Pt that is carried on the aggregated zirconia can be suppressed. According to the present inventors' examination, the activity of Pt carried on zirconia is lower than the activity of Pt carried on alumina; therefore, by setting ZrO₂/Pt in the above-described range, the effect of the art disclosed herein can be achieved at the high level.

An exhaust gas purifying catalyst [5] is any one of the exhaust gas purifying catalysts [1] to [4], in which the catalyst precious metal does not contain Rh. Thus, an oxidation reaction can be advanced smoothly by avoiding the competition with purification of the exhaust gas by a reduction reaction, and CO in the exhaust gas can be purified at the higher level.

An exhaust gas purifying catalyst body [6] includes a base material and a catalyst layer provided on the base material, in which the catalyst layer contains any one of the exhaust gas purifying catalysts [1] to [5]. Thus, even after long exposure to high temperature, the excellent exhaust gas purifying performance (for example, CO purifying performance) can be exerted.

An exhaust gas purifying catalyst body [7] is the exhaust gas purifying catalyst body [6], in which the catalyst layer includes a lower layer part existing on a side of the base material, and an upper layer part existing on a side of a surface of the catalyst layer, the lower layer part contains any one of the exhaust gas purifying catalysts [1] to [5], and the upper layer part contains an exhaust gas purifying catalyst different from the exhaust gas purifying catalyst in the lower layer part. Thus, the effect of the exhaust gas purifying catalyst is exerted at the high level and various toxic components included in the exhaust gas can be reacted and removed efficiently.

An exhaust gas purifying catalyst body [8] is the exhaust gas purifying catalyst body [6], in which the catalyst layer includes a former stage part existing on an upstream side of the catalyst layer and a latter stage part existing on a downstream side of the catalyst layer in a flowing direction of exhaust gas, the latter stage part contains any one of the exhaust gas purifying catalysts [1] to [5], and the former stage part contains an exhaust gas purifying catalyst different from the exhaust gas purifying catalyst in the latter stage part. Thus, the effect of the exhaust gas purifying catalyst is exerted at the high level and various toxic components included in the exhaust gas can be reacted and removed efficiently.

### [Brief Description of Drawings]

Fig. 1 is a cross-sectional view schematically illustrating an exhaust gas purifying catalyst according to the present embodiment.
Fig. 2 is a schematic view illustrating an exhaust gas purifying system according to the present embodiment.
Fig. 3 is a perspective view schematically illustrating an exhaust gas purifying catalyst body illustrated in Fig. 2.
Fig. 4 is a partial cross-sectional view in which the exhaust gas purifying catalyst body illustrated in Fig. 3 is cut along a cylinder axis direction.
Fig. 5 is a diagram corresponding to Fig. 4 according to a first modification.
Fig. 6 is a diagram corresponding to Fig. 4 according to a second modification.
Fig. 7 is a diagram corresponding to Fig. 4 according to a third modification.
Fig. 8A is an FIB-SEM observation image according to Example 2.
Fig. 8B is an FIB-SEM observation image according to Comparative Example 6.
Fig. 9 is a chart expressing line analysis of FE-EPMA according to Example 2.
Fig. 10 is a graph in which CO 50% purifying temperatures in Table 1 are compared.
Fig. 11 is a graph in which CO 50% purifying temperatures in Table 2 are compared.
Fig. 12 is a cross-sectional view schematically illustrating an exhaust gas purifying catalyst according to a conventional art.

### [Description of Embodiments]

Preferred embodiments of the present invention will be described below with reference to the drawings. Incidentally, matters other than matters particularly mentioned in the present specification and necessary for the implementation of the present invention can be grasped as design matters of those skilled in the art based on the prior art in the relevant field. The present invention can be carried out based on the contents disclosed in this specification and technical common sense in the field. In the drawings below, the members and parts with the same operation are denoted with the same reference symbols and the overlapping description may be omitted or simplified. The size (length, width, thickness, and the like) in each drawing does not always reflect the actual size. In the present specification, the notation "A to B" (A and B are arbitrary numerals) for a range signifies a value more than or equal to A and less than or equal to B, and also encompasses the meaning of being "preferably more than A" and "preferably less than B".

### <<Exhaust gas purifying catalyst 100>>

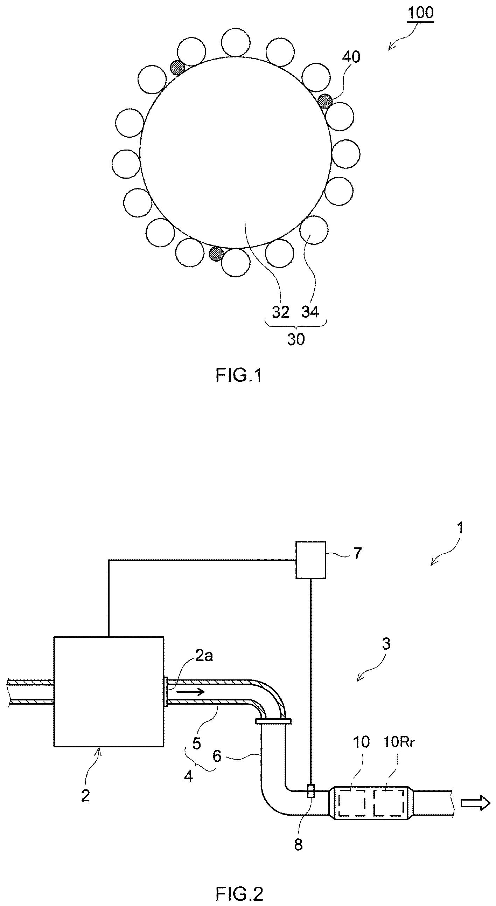

Fig. 1 is a cross-sectional view schematically illustrating an exhaust gas purifying catalyst 100 according to the present embodiment. As illustrated in Fig. 1, the exhaust gas purifying catalyst 100 includes a parent material 30 and a catalyst precious metal 40 carried by the parent material. The parent material 30 includes an alumina particle 32 and zirconia 34 that covers at least a part of a surface of the alumina particle 32, which will be described in detail below. It is preferable that the catalyst precious metal 40 be in contact with the alumina particle 32 as illustrated in Fig. 1. It is more preferable that the catalyst precious metal 40 be also in contact with the zirconia 34.

The catalyst precious metal 40 contains at least platinum (Pt). The catalyst precious metal 40 containing Pt makes it possible to improve the oxidation activity and for example, to efficiently purify CO in the exhaust gas. The catalyst precious metal 40 may be formed of Pt only, for example, or may contain Pd, which is an oxidation catalyst, in addition to Pt. The catalyst precious metal 40 may further contain a precious metal other than Pt and/or Pd (that is, gold (Au), silver (Ag), iridium (Ir), ruthenium (Ru), or osmium (Os)) within the range that does not remarkably interrupt the effect of the art disclosed herein (for example, 10 mass% or less of the entire catalyst precious metal 40). It is preferable that the catalyst precious metal 40 do not contain a reduction catalyst, for example rhodium (Rh). Thus, the oxidation reaction can be advanced smoothly by avoiding the competition with purification of the exhaust gas by the reduction reaction, and for example, CO in the exhaust gas can be purified at the higher level.

It is preferable that the catalyst precious metal 40 mainly contain Pt (in other words, Pt occupy 50 mass% or more). The ratio of Pt in the entire catalyst precious metal 40 is preferably 60 mass% or more, more preferably 80 mass% or more, still more preferably 95 mass% or more, and the most preferably 100 mass% (that is to say, the catalyst precious metal 40 consists of Pt only).

The catalyst precious metal 40 is typically in a particulate form. The average particle diameter of the catalyst precious metal 40 is not limited in particular. From the viewpoint of increasing the contact area with the exhaust gas, the catalyst precious metal 40 is preferably microparticles with sufficiently small particle diameter. The average particle diameter of the catalyst precious metal 40 is typically smaller than that of the zirconia 34, and is for example 15 nm or less, preferably 10 nm or less, and more preferably 5 nm or less. The average particle diameter of the catalyst precious metal 40 may be 1 nm or more, for example. Note that the average particle diameter of the catalyst precious metal 40 can be obtained as the average value (based on the number) of the diameters of 50 or more particles of the catalyst precious metal 40 that are obtained by transmission electron microscope (TEM) observation.

The amount of carrying the catalyst precious metal 40 is not limited in particular and can be determined as appropriate in accordance with the design of an exhaust gas purifying catalyst body using the exhaust gas purifying catalyst 100, for example. When the mass of the parent material 30 is 100 parts by mass, the amount of carrying the catalyst precious metal 40 is for example 0.01 parts by mass or more, preferably 0.05 parts by mass or more, and more preferably 0.1 parts by mass or more. When the mass of the parent material 30 is 100 parts by mass, the amount of carrying the catalyst precious metal 40 is for example 10 parts by mass or less, preferably 5 parts by mass or less, and more preferably 3 parts by mass or less.

The parent material 30 includes the alumina (Al₂O₃, aluminum oxide) particle 32 and the zirconia (ZrO₂, zirconium oxide) 34 that covers at least a part of the surface of the alumina particle 32 as illustrated in the drawing. In other words, the parent material 30 is the alumina particle 32 whose surface is covered with the zirconia 34 at least partially.

The overall shape of the parent material 30 is not limited in particular and may be substantially spherical, elliptic-spherical, or undetermined, for example. Note that the term "substantially spherical shape" in this specification refers to a mode that is regarded as being a sphere (ball) generally as a whole, with an average aspect ratio being about 1 to 2, for example 1 to 1.5.

The average particle diameter (typically, the secondary particle diameter) of the parent material 30 is not limited in particular. The average particle diameter of the parent material 30 is usually larger than the average particle diameter of the catalyst precious metal 40 or the zirconia 34, and is for example 0.5 µm or more, preferably 1 µm or more, and more preferably 3 µm or more. The average particle diameter of the parent material 30 is for example 200 µm or less, preferably 100 µm or less, and more preferably 60 µm or less. Note that the average particle diameter of the parent material 30 can be obtained as a median diameter (D50: based on volume) by the measurement based on a laser diffraction/scattering method.

The alumina particle 32 is typically a first component of the parent material 30 (the component whose content ratio is the highest based on the mass). The alumina particle 32 is preferably a main body of the parent material 30. The alumina particle 32 may be formed of Al₂O₃ substantially (for example, by 95 mass% or more), or may contain an additive component other than Al₂O₃ within the range not remarkably interrupting the effect of the art disclosed herein. Examples of the additive component include oxides of rare-earth elements, such as lanthanum oxide (La₂O₃), Pr₂O₃, Nd₂O₃, and Y₂O₃. In particular, La₂O₃ is preferable. That is to say, the alumina particle 32 may be a particle of lanthanum-alumina complex oxide. When the alumina particle 32 contains the oxide of the rare-earth element, the heat resistance or the like of the exhaust gas purifying catalyst 100 can be improved.

When the alumina particle 32 contains the rare-earth element, the content of the rare-earth element in the entire alumina particle 32 may be, for example, 0.1 mass% or more, 0.5 mass% or more, or 1 mass% or more in terms of oxide. In addition, the content of the rare-earth element in the alumina particle 32 is, for example, 20 mass% or less, 10 mass% or less, or 5 mass% or less in terms of oxide. The content of the rare-earth element in the entire alumina particle 32 can be obtained by measurement using a fluorescence X-ray analysis device (XRF).

The shape of the alumina particle 32 is typically substantially spherical. However, the shape of the alumina particle 32 is not limited in particular and may be substantially elliptic-spherical or undetermined, for example. The alumina particle 32 is usually a secondary particle (aggregate) in which primary particles are aggregated. When the alumina particle 32 is the secondary particle, the large specific surface area can be secured. However, the alumina particle 32 may be either the primary particle or a mixture of the primary particle and the secondary particle.

The zirconia 34 has a microscopic particulate shape and scatters on the surface of the alumina particle 32 as illustrated in the drawing. The zirconia 34 can be the secondary particle (aggregate) in which the primary particles are aggregated on the surface of the alumina particle 32. In this embodiment, the average particle diameter (typically, the secondary particle diameter) of the zirconia 34 is 50 nm or less. Thus, the zirconia 34 can be disposed on the surface of the alumina particle 32 in the highly dispersive manner more than before, so that the number of contact points between the alumina particle 32 and the zirconia 34 can be increased. As a result, the number of acid sites of the alumina particle 32 can be increased and the catalyst precious metal 40 can be easily kept in the metal state (active state). Note that the average particle diameter of the zirconia 34 can be obtained in such a way that the equivalent circle diameters (i.e., Heywood diameters) of six or more pieces of the zirconia 34 optionally selected from a SEM observation image, which is obtained by a focused ion beam scanning electron microscope (FIB-SEM), are measured and the average value thereof is obtained. In order to obtain the average particle diameter, the SEM observation is preferably performed at a measurement magnification of at least 300,000 times. To calculate the equivalent circle diameter and the average value, image analysis software (for example, ImageJ, etc.) may be used.

The average particle diameter of the zirconia 34 is preferably less than 50 nm, more preferably 40 nm or less, still more preferably 30 nm or less, and particularly preferably 25 nm or less, and may be 21 nm or less, for example. Thus, the number of contact points between the alumina particles 32 and the zirconia 34 is increased further and the number of acid sites of the alumina particle 32 can be effectively increased. The average particle diameter of the zirconia 34 is generally 5 nm or more and preferably 10 nm or more and may be 15 nm or more, for example. When the average particle diameter of the zirconia 34 (the secondary particle diameter of the aggregate) that can be observed with the SEM is a predetermined value or more, a sufficient amount of zirconia 34 can be disposed in the highly dispersive manner on the surface of the alumina particle 32. Thus, it is possible to effectively increase the number of acid sites on the surface of the alumina particle 32 to such a degree that the electron state of the catalyst precious metal 40 is affected, so that the effect of the art disclosed herein can be achieved at the high level.

In this embodiment, the mole ratio (zirconia 34/Pt) of the zirconia 34 to Pt is 8 or more. Thus, even when the average particle diameter of the zirconia 34 is as small as 50 nm or less, many Pt can exist in contact with, or near the zirconia 34. As a result, the amount of acid sites generated by the zirconia 34 becomes sufficient with respect to the amount of carried Pt, and Pt can be suitably kept in the metal state. Accordingly, the decrease in oxidation activity can be suppressed even after the endurance and the excellent exhaust gas purifying performance (for example, CO purifying performance) can be kept. The mole ratio (zirconia 34/Pt) described above may be about 50 or less and is preferably 30 or less and for example, 29 or less. Thus, the ratio of Pt that is carried on the aggregated zirconia 34 (that is, Pt with low activity) can be suppressed and the effect of the art disclosed herein can be achieved at the high level.

The mass ratio of the zirconia in the parent material 30, that is, the mass ratio of the zirconia to the entire mass of the parent material 30 (the total mass of the alumina particles 32 and the zirconia 34) is about 1 mass% or more, for example 3 mass% or more, and preferably 5 mass% or more. Thus, the degree of dispersion of the zirconia 34 is increased more and the number of acid sites of the surface of the alumina particle 32 can be increased more effectively. On the other hand, the mass ratio of the zirconia in the parent material 30 is preferably 30 mass% or less, more preferably 25 mass% or less, and still more preferably 21 mass% or less. Thus, the ratio of Pt that is carried by the aggregated zirconia 34 (that is, Pt with low activity) can be suppressed and the effect of the art disclosed herein can be achieved at the high level. Note that the mass ratio of the zirconia in the parent material 30 can be obtained by measurement using the fluorescence X-ray analysis device (XRF).

In order to effectively increase the number of acid sites on the surface of the alumina particle 32, the zirconia is preferably distributed mostly on the surface of the alumina particle 32 only, or on and near the surface of the alumina particle 32. Therefore, in the case where quantitative line analysis of Zr is performed using a field emission electron probe micro-analyzer (FE-EPMA) from the surface of the alumina particle 32 toward a center and the depth from the surface to the center is expressed with the surface defined as 0% and the center defined as 100%, the peak top of Zr intensity is preferably within the range of 0 to 30%. The peak top of the Zr intensity is more preferably within the range of 0 to 25% and particularly preferably within the range of 0 to 24%.

Note that the shape, number, etc. of the zirconia 34 are not limited to the illustrated ones. In the exhaust gas purifying catalyst 100, zirconia exists as the zirconia 34 on the surface of the alumina particle 32 typically. However, zirconia may also exist inside the alumina particle 32 within the range not remarkably interrupting the effect of the present invention. For example, in a case where the surface of the alumina particle 32 is covered with the zirconia 34 by a spray drying method to be described below, if the alumina particle 32 is in the secondary particle form, a zirconia precursor to be described below enters through a gap between the primary particles so that zirconia can exist also inside the alumina particle 32. In addition, the zirconia 34 may contain an additive component other than ZrO₂ within the range not remarkably interrupting the effect of the art disclosed herein (for example, 10 mass% or less).

### <<Manufacturing method for exhaust gas purifying catalyst 100>>

Although not limited in particular, the exhaust gas purifying catalyst 100 can be manufactured as follows in accordance with a method including, for example, (S1) a suspension preparing step, (S2) a spray drying step, (S3) a sintering step, and (S4) a catalyst precious metal carrying step in this order.

In (S1) the suspension preparing step, first, a zirconia precursor is prepared as a raw material of the zirconia 34. The zirconia precursor is preferably in a mode of a solution (Zr solution) in which Zr ions are sufficiently dissolved in a solvent. Thus, compared to a method in which "zirconia sol" disclosed in Patent Literature 1 is used, for example, the average particle diameter of the zirconia 34 can be adjusted to be small relatively to suitably achieve an average particle diameter of 50 nm or less. One example of the zirconia precursor is zirconium oxynitrate hydrate using water as the solvent. Next, the zirconia precursor is mixed with the alumina particles 32 in a solvent (for example, pure water), so that a suspension in which the alumina particles 32 are dispersed and the zirconia precursor is dissolved is prepared.

In (S2) the spray drying step, the prepared suspension is spray-dried in a jet drying device. Conditions of the spray drying may be determined with reference to known conditions that are employed when a particle is covered with a solid content of a solution by a spray drying method. Thus, a powder body in which the zirconia precursor adheres to the surface of the alumina particle 32 in the highly dispersed state can be obtained. By the spray drying method, powder can be obtained in such a way that the suspension is jet into a hot wind as microscopic liquid droplets and the solvent is vaporized instantly; thus, the zirconia 34 with an average particle diameter of 50 nm or less can be suitably achieved. Note that the mass ratio of zirconia in the parent material 30 can be adjusted by changing the concentration ratio between the alumina particles 32 and the zirconia precursor in the suspension. In addition, this step may be followed by drying additionally in order to remove the solvent sufficiently.

In (S3) the sintering step, the powder body obtained above is sintered. Thus, the zirconia precursor (for example, Zr ions) is converted into the zirconia 34. The sintering conditions may be determined as appropriate in accordance with the kind of the zirconia precursor, for example. Thus, the alumina particle 32 (that is, the parent material 30) whose surface is covered with the zirconia 34 at least partially can be obtained.

In (S4) the catalyst precious metal carrying step, first, a catalyst precious metal source containing at least Pt (for example, a solution containing Pt as ions) and the parent material 30 are mixed in a dispersion medium. Next, the obtained mixed solution is dried. Then, the obtained dried substance is sintered. Thus, the catalyst precious metal 40 can be carried by the parent material 30. That is to say, the exhaust gas purifying catalyst 100 as described above can be obtained.

### <<Use of exhaust gas purifying catalyst 100>>

The exhaust gas purifying catalyst 100 is used by being carried by a honeycomb structure or the like typically. The exhaust gas purifying catalyst 100 can be suitably used as a catalyst component of a diesel oxidation catalyst (DOC), an NOx storage reduction (NSR) catalyst, or an ammonia slip catalyst (ASC) by being carried by a straight flow type honeycomb structure, for example. The exhaust gas purifying catalyst 100 can also be used suitably as a catalyst component that is applied to a gasoline particulate filter (GPF) or a diesel particulate filter (DPF) to remove a particulate matter (PM) included in the exhaust gas by being carried by a wall flow type honeycomb structure, for example.

### <<Exhaust gas purifying system 1>>

Fig. 2 is a schematic diagram of an exhaust gas purifying system 1. The exhaust gas purifying system 1 includes an internal-combustion engine (engine) 2, an exhaust gas purifying device 3, and an engine control unit (ECU) 7. The exhaust gas purifying system 1 is configured to purify a toxic component in the exhaust gas emitted from the internal-combustion engine 2, such as HC, CO, or NOx, in the exhaust gas purifying device 3. Note that an arrow in Fig. 2, etc. indicates a flowing direction of the exhaust gas. In the description below, along the flow of the exhaust gas, the side closer to the internal-combustion engine 2 is referred to as an upstream side and the side farther from the internal-combustion engine 2 is referred to as a downstream side.

The internal-combustion engine 2 is configured here using a diesel engine of a diesel vehicle as a main body. However, the internal-combustion engine 2 may alternatively be an engine other than the diesel, for example, a gasoline engine, a hybrid engine mounted on a hybrid vehicle, or the like. The internal-combustion engine 2 includes a combustion chamber (not shown). The combustion chamber is connected to a fuel tank (not shown). The fuel tank stores diesel fuel (light oil) here. The fuel to be stored in the fuel tank may alternatively be gasoline or the like. In the combustion chamber, the fuel supplied from the fuel tank is mixed with oxygen and combusted. Thus, combustion energy is converted into mechanical energy. The combustion chamber communicates with an exhaust port 2a. The exhaust port 2a communicates with the exhaust gas purifying device 3. The combusted fuel gas turns into exhaust gas, which is then emitted to the exhaust gas purifying device 3.

The exhaust gas purifying device 3 includes an exhaust path 4 that communicates with the internal-combustion engine 2, a pressure sensor 8, a first catalyst body 10, and a second catalyst body 10Rr. The exhaust path 4 is an exhaust gas flow channel where the exhaust gas flows. The exhaust path 4 includes an exhaust manifold 5 and an exhaust pipe 6 here. An upstream end part of the exhaust manifold 5 is connected to the exhaust port 2a of the internal-combustion engine 2. A downstream end part of the exhaust manifold 5 is connected to the exhaust pipe 6. In the middle of the exhaust pipe 6, the first catalyst body 10 and the second catalyst body 10Rr are disposed in this order from the upstream side. However, the disposition of the first catalyst body 10 and the second catalyst body 10Rr may be optionally changed. Moreover, the number of first catalyst bodies 10 and the number of second catalyst bodies 10Rr are not limited in particular and each of them may be more than one. Furthermore, the second catalyst body 10Rr is not always a necessary structure and can be omitted in another embodiment. A third catalyst body may be disposed on a downstream side of the second catalyst body 10Rr. The number of second catalyst bodies 10Rr and/or the number of third catalyst bodies may be one, or two or more.

The first catalyst body 10 is one example of the exhaust gas purifying catalyst body using the aforementioned exhaust gas purifying catalyst 100. The first catalyst body 10 can be, for example, a diesel oxidation catalyst (DOC), an NOx storage reduction (NSR) catalyst, a three-way catalyst (TWC) that purifies HC, CO, and NOx included in the exhaust gas at the same time, or the like. Note that the first catalyst body 10 may be referred to as "exhaust gas purifying catalyst body" below. The structure of the first catalyst body (exhaust gas purifying catalyst body) 10 will be described in detail below.

The second catalyst body 10Rr may be similar to the conventional one, and is not limited in particular. The second catalyst body 10Rr is, for example, a diesel particulate filter (DPF), an SCR catalyst, a gasoline particulate filter (GPF), or the like. On the downstream side of the second catalyst body 10Rr, an SCR catalyst, an ammonia slip catalyst (ASC), the SCR catalyst and the ammonia slip catalyst that are arranged in order from the upstream side, or the like may be included as the third catalyst body.

The ECU 7 controls the internal-combustion engine 2 and an exhaust gas purifying device 3. The ECU 7 is electrically connected to the internal-combustion engine 2 and a sensor (for example, the pressure sensor 8, a temperature sensor, an oxygen sensor, or the like) disposed at each part of the exhaust gas purifying device 3. Note that the structure of the ECU 7 may be similar to the conventional structure without particular limitations. The ECU 7 is, for example, a processor or an integrated circuit. The ECU 7 includes an input port (not shown) and an output port (not shown). The ECU 7 receives, for example, information about the operation state of the vehicle and the amount, the temperature, the pressure, and the like of the exhaust gas emitted from the internal-combustion engine 2. The ECU 7 receives information detected by the sensor (for example, the pressure measured by the pressure sensor 8) through the input port. The ECU 7 transmits a control signal through the output port on the basis of the received information, for example. The ECU 7 controls the operation, for example, controls the fuel injection or ignition of the internal-combustion engine 2 and controls to regulate the amount of intake air. The ECU 7 controls the driving and stopping of the exhaust gas purifying device 3 on the basis of the operation state of the internal-combustion engine 2 and the amount of the exhaust gas emitted from the internal-combustion engine 2, for example.

### <<Exhaust gas purifying catalyst body 10>>

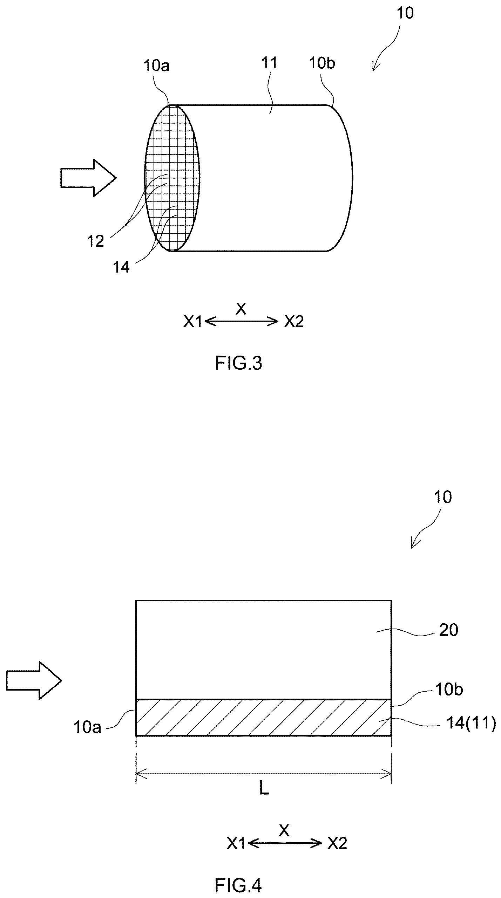

Fig. 3 is a perspective view schematically illustrating the exhaust gas purifying catalyst body 10. The exhaust gas purifying catalyst body 10 is one example of the first catalyst body 10 including the exhaust gas purifying catalyst 100 described above. In Fig. 3, the upstream side of the exhaust path 4, which is relatively close to the internal-combustion engine 2, is expressed on the left side and the downstream side of the exhaust path, which is relatively far from the internal-combustion engine 2, is expressed on the right side. Moreover, in Fig. 3, reference symbol X denotes a cylinder axis direction of the exhaust gas purifying catalyst body 10. The exhaust gas purifying catalyst body 10 is disposed in the exhaust path 4 so that the cylinder axis direction X extends along the flowing direction of the exhaust gas. The cylinder axis direction X is the flowing direction of the exhaust gas. In the description below, in the cylinder axis direction X, one direction X1 may be referred to as the upstream side (also referred to as exhaust gas inflow side or front side) and the other direction X2 may be referred to as the downstream side (also referred to as exhaust gas outflow side or rear side). However, these are merely the directions for the convenience of description and will not limit the mode of installing the exhaust gas purifying catalyst body 10.

The exhaust gas purifying catalyst body 10 includes a base material 11 and a catalyst layer 20 provided on the base material 11 (see Fig. 4). The exhaust gas purifying catalyst body 10 may include a member other than the base material 11 and the catalyst layer 20. The exhaust gas purifying catalyst body 10 may additionally include a layer other than the catalyst layer 20, for example. An end part of the exhaust gas purifying catalyst body 10 in the one direction X1 corresponds to an exhaust gas inlet 10a and an end part thereof in the other direction X2 corresponds to an exhaust gas outlet 10b. The outer shape of the exhaust gas purifying catalyst body 10 is a cylindrical shape here. However, the outer shape of the exhaust gas purifying catalyst body 10 is not limited in particular and may be, for example, an elliptical cylindrical shape, a polygonal cylindrical shape, a pipe-like shape, a foam-like shape, a pellet shape, a fibrous shape, or the like.

The base material 11 forms the frame of the exhaust gas purifying catalyst body 10. The base material 11 is not particularly limited and various materials and various modes that have conventionally been employed in this type of applications can be used. The base material 11 has a straight flow structure here. In another embodiment, however, the base material may have a wall flow structure in a case where, for example, the exhaust gas purifying catalyst body is used as GPF or DPF. In such a case, the catalyst layer can be formed either on a surface of a partition wall of the base material or in a pore of the base material.

The base material 11 may be, for example, a ceramic carrier formed of ceramic such as cordierite, aluminum titanate, or silicon carbide, or a metal carrier formed of stainless steel (SUS), Fe-Cr-Al-based alloy, Ni-Cr-Al-based alloy, or the like. As shown in Fig. 3, the base material 11 has a honeycomb structure here. The base material 11 includes a plurality of cells (cavities) 12 arrayed regularly in the cylinder axis direction X, and partition walls (ribs) 14 that section the cells 12. Although there is no particular limitation, the volume of the base material 11 (the apparent volume including the capacity of the cells 12) may be about 0.1 to 10 L, and for example 0.5 to 5 L. In addition, an average length (entire length) L of the base material 11 along the cylinder axis direction X may be generally 10 to 500 mm, for example 50 to 300 mm.

The cell 12 serves as a flow channel for the exhaust gas. The cell 12 extends in the cylinder axis direction X. The cell 12 is a penetration hole penetrating the base material 11 in the cylinder axis direction X. The shape, the size, the number, and the like of the cells 12 may be designed in consideration of, for example, the flow rate, the component, and the like of the exhaust gas flowing in the exhaust gas purifying catalyst body 10. The shape of the cross section of the cell 12 that is orthogonal to the cylinder axis direction X is not limited in particular. The cross-sectional shape of the cell 12 may be, for example, a tetragon such as a square, a parallelogram, a rectangle, or a trapezoid, another polygon (such as a triangle, a hexagon, or an octagon), a wavy shape, a circular shape, or various other geometric shapes. The partition wall 14 faces the cell 12 and sections between the adjacent cells 12. Although not particularly limited, the average thickness of the partition wall 14 (the size in a direction orthogonal to the surface, this definition similarly applies to the description below) may be generally 0.1 to 10 mil (1 mil is equal to about 25.4 µm) and for example, 0.2 to 5 mil from the viewpoint of improving the mechanical strength, the viewpoint of reducing the pressure loss, or the like. The partition wall 14 may be porous so that the exhaust gas can pass therethrough.

The catalyst layer 20 is a reaction field that purifies the toxic component in the exhaust gas. The catalyst layer 20 is a porous body including a number of pores (gaps). The exhaust gas that has entered the exhaust gas purifying catalyst body 10 is brought into contact with the catalyst layer 20 while flowing in the flow channel (cells 12) of the exhaust gas purifying catalyst body 10. Thus, the toxic component in the exhaust gas is purified.

Fig. 4 is a partial cross-sectional view schematically illustrating a part of a cross section in which the exhaust gas purifying catalyst body 10 is cut along the cylinder axis direction X. The catalyst layer 20 is provided on the base material 11 here, specifically on the surface of the partition wall 14. However, the catalyst layer 20 may intrude into the partition wall 14 partially or entirely.

The catalyst layer 20 contains the aforementioned exhaust gas purifying catalyst 100. Therefore, the exhaust gas purifying catalyst 100 includes the alumina particles 32 and the zirconia 34 as the parent material 30 as the necessary components. In addition, the exhaust gas purifying catalyst 100 contains at least Pt as the catalyst precious metal 40. The exhaust gas purifying catalyst body 10 can oxidize CO and/or HC included in the exhaust gas typically, thereby purifying the exhaust gas. Even after the exhaust gas purifying catalyst 100 is exposed to high temperature for a long time, the oxidation activity can be kept at the higher level than before. Therefore, the exhaust gas purifying catalyst 100 can exert the excellent exhaust gas purifying performance (for example, CO and/or HC purifying performance).

The mole ratio (zirconia 34/Pt) of the zirconia 34 to Pt is similar to that in the exhaust gas purifying catalyst 100 described above. The mole quantity of the catalyst precious metal 40 (Pt in particular) per liter of the volume of the base material 11 can be determined as appropriate in accordance with, for example, the amount of exhaust gas, the application, the kind of the catalyst precious metal, or the like. Although there is no particular limitation, the mole quantity thereof may be, for example, 0.001 mol/L or more, 0.002 mol/L or more, or 0.005 mol/L or more and for example 0.1 mol/L or less, 0.05 mol g/L or less, or 0.01 mol/L or less. In addition, although there is no particular limitation, the mole quantity of the zirconia 34 per liter of the volume of the base material 11 may be, for example, 0.01 mol/L or more, 0.02 mol g/L or more, or 0.04 mol g/L or more and for example 1 mol g/L or less, 0.5 mol/L or less, or 0.2 g/L or less.

In this specification, "per liter of the volume of the base material 11" refers to per liter of the bulk capacity (apparent volume) of the whole including the capacity of cell paths in addition to the pure volume of the base material 11 (exhaust gas purifying catalyst body 10). In the description below, "mol/L" represents the amount included in a volume of 1 L of the base material (that is, mol/L-cat.) and "g/L" represents the amount included in a volume of 1 L of the base material (that is, g/L-cat.).

The catalyst layer 20 may contain an optional component other than the exhaust gas purifying catalyst 100. Examples of the optional component include (1) an OSC material, (2) a non-OSC material, (3) a gas purifying catalyst including a catalyst metal other than Pt, (4) an alkaline-earth element, and (5) another additive component.
(1) The OSC material is a material that has oxygen storing capacity. If the catalyst layer 20 contains the OSC material, the exhaust gas purifying catalyst body 10 can exert the excellent purifying performance stably even when the air-fuel ratio of the exhaust gas changes depending on a travel condition of a vehicle, etc. Examples of the OSC material include ceria-containing complex oxides such as a complex oxide containing ceria and zirconia (ceria-zirconia complex oxide, which is so-called CZ complex oxide or ZC complex oxide), and the like. If the OSC material contains zirconia, the thermal deterioration of ceria can be suppressed; therefore, the ceria-zirconia complex oxide is preferable as the OSC material.

If the OSC material is the ceria-containing complex oxide, the content ratio of ceria in the entire CZ complex oxide is preferably 15 mass% or more and more preferably 20 mass% or more from the viewpoint of exerting the oxygen storing capacity sufficiently. On the other hand, if the content ratio of ceria is too high, the basicity of the OSC material may become too high. Therefore, the content ratio of ceria is preferably 40 mass% or less and more preferably 30 mass% or less.

The OSC material may contain an oxide of a rare-earth element for the purpose of improving the characteristics (in particular, heat resistance and oxygen absorption and release characteristics, etc.). Examples of the rare-earth element include Sc, Y, La, Pr, Nd, Pm, Sm, Eu, Gd, Tb, Dy, Ho, Er, Tm, Yb, Lu, and the like. Preferred examples of the oxide of the rare-earth element include Pr₂O₃, Nd₂O₃, La₂O₃, and Y₂O₃.

The amount of the OSC material per liter of the volume of the base material 11 is not limited in particular and may be, for example, 10 g/L or more, 25 g/L or more, or 50 g/L or more, and may be, for example, 150 g/L or less, 100 g/L or less, or 80 g/L or less.

(2) The non-OSC material is a material that does not have the oxygen storing capacity. Examples of the non-OSC material include oxides such as alumina, titania, zirconia, and silica. To the oxides used as the non-OSC material, a small amount (for example, 1 mass% or more and 10 mass% or less) of the oxide of the rare-earth element, such as Pr₂O₃, Nd₂O₃, La₂O₃, or Y₂O₃, may be added in order to improve the heat resistance or the like. The non-OSC material is preferably Al₂O₃, and more preferably Al₂O₃ in which La₂O₃ is composited (La₂O₃-Al₂O₃ complex oxide; LA complex oxide) because the heat resistance and the durability are particularly excellent.

The amount of the non-OSC material per liter of the volume of the base material 11 is not limited in particular and may be, for example, 10 g/L or more, 25 g/L or more, or 50 g/L or more, and may be, for example, 150 g/L or less, 100 g/L or less, or 80 g/L or less.

(3) The exhaust gas purifying catalyst including the catalyst metal other than Pt is an optional catalyst for purifying the exhaust gas. In the catalyst layer 20, the aforementioned exhaust gas purifying catalyst 100 and the exhaust gas purifying catalyst including an optional catalyst metal other than Pt may be used in combination. In the case where the aforementioned exhaust gas purifying catalyst 100 and the exhaust gas purifying catalyst including the optional catalyst metal other than Pt are used in combination in the catalyst layer 20, in particular, the exhaust gas purifying catalyst body 10 can be excellent in not just the purifying performance for CO included in the exhaust gas but also the purifying performance for HC and/or NOx.

In the optional exhaust gas purifying catalyst, the optional catalyst metal other than Pt is typically carried by the carrier. Examples of the carrier include (1) the OSC material and/or (2) the non-OSC material that are described above. The carrier may be the parent material 30 used for the aforementioned exhaust gas purifying catalyst 100.

In some embodiments, it is preferable that the optional catalyst metal do not contain Rh. In some embodiments, the optional catalyst metal may be the catalyst precious metal other than Pt, such as Au, Ir, or Ru. Moreover, in some other embodiments, the optional catalyst metal may be metal species other than the precious metal, such as an alkaline metal, an alkaline-earth metal, or a transition metal. The optional catalyst metal other than Pt is preferably used as microparticles with sufficiently small particle diameter from the viewpoint of increasing the contact area with the exhaust gas. The average particle diameter of the catalyst metal (specifically, the average value of the particle diameters of 50 or more catalyst metal particles obtained by the transmission electron microscope (TEM) observation) may be about 1 to 15 nm, for example 10 nm or less, or moreover 5 nm or less.

The entire amount of the catalyst metal in the exhaust gas purifying catalyst body 10 (in the case of containing the catalyst metal other than Pt, this may be the total amount) may be, for example, 0.01 g/L or more, 0.05 g/L or more, 0.1 g/L or more, 0.5 g/L or more, or 1 g/L or more from the viewpoint of the high exhaust gas purifying performance. From the viewpoint of the balance between the exhaust gas purifying performance and the cost, for example, this amount may be 15 g/L or less, 10 g/L or less, 5 g/L or less, 3 g/L or less, or 1.5 g/L or less.
(4) The alkaline-earth element may be, for example, calcium (Ca) or barium (Ba). By the alkaline-earth element, the toxification of the catalyst metal (oxidation catalyst in particular) can be suppressed. Moreover, with the alkaline-earth element, the dispersibility of the catalyst metal can be increased and the sintering due to the particle growth of the catalyst metal can be suppressed. In the case where the catalyst layer 20 contains the alkaline-earth element together with the OSC material, the amount of oxygen absorption into the OSC material in a lean atmosphere (oxygen-excess atmosphere) in which the fuel is less than the theoretical air-fuel ratio can be improved further. The alkaline-earth element can be contained in a form of oxide, hydroxide, carbonate, nitrate, sulfate, phosphate, acetate, formate, oxalate, halide, or the like.
(5) The other additive component may be an NOx storing material with the NOx storage capacity, a stabilizer, a binder, various additives, or the like. Examples of the NOx storing material include rare-earth elements such as Ce, alkaline-earth metals such as Mg, Ca, Sr, and Ba, and alkali metals such as K and Cs. Examples of the stabilizer include rare-earth elements such as yttrium (Y), lanthanum (La), and neodymium (Nd). Note that the rare-earth element can exist in the catalyst layer 20 in a mode of the oxide. As the binder, alumina sol, silica sol, boehmite, or the like is given.

Although there is no particular limitation, the coat quantity (molding quantity) of the catalyst layer 20 may be about 30 g/L or more, typically 50 g/L or more, preferably 70 g/L or more, and for example 100 g/L or more, and may be about 500 g/L or less, typically 400 g/L or less, and for example 300 g/L or less per liter of the volume of the exhaust gas purifying catalyst body 10 (the volume of the base material 11). By satisfying the above range, both the improvement in purifying performance and the decrease of the pressure loss can be achieved at the high level. Note that in this specification, the term "coat quantity" refers to the mass of the solid content included per unit volume of the exhaust gas purifying catalyst body 10.

The length and thickness of the catalyst layer 20 can be designed as appropriate in consideration of, for example the size of the cell 12 of the base material 11, the flow rate of the exhaust gas flowing in the exhaust gas purifying catalyst body 10, and the like. The catalyst layer 20 may be provided either continuously or intermittently on the partition wall 14 of the base material 11. For example, the catalyst layer 20 may be provided along the cylinder axis direction X from the exhaust gas inlet 10a or may be provided along the cylinder axis direction X from the exhaust gas outlet 10b.

Although there is no particular limitation, the coat thickness (average thickness) of the catalyst layer 20 is about 1 to 300 µm, typically 5 to 200 µm, and for example 10 to 100 µm. Thus, both the improvement in purifying performance and the decrease of the pressure loss can be achieved at the high level. Although there is no particular limitation, the entire coat width (average length) of the catalyst layer 20 in the cylinder axis direction X is about 20% or more, preferably 50% or more, typically 80% or more, and for example 90% or more of the entire length L of the base material 11 and may be the same length as the entire length L of the base material 11. That is to say, the exhaust gas purifying catalyst 100 may be contained only in a partial region of the catalyst layer 20.

### <<First modification>>

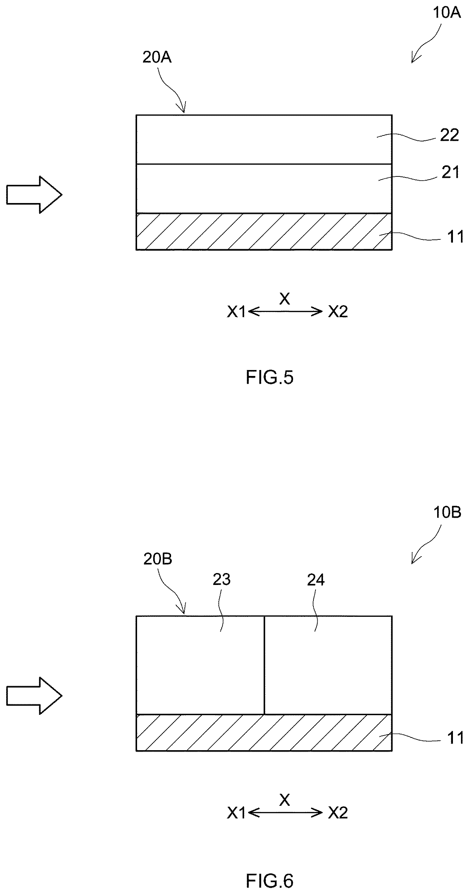

Fig. 5 is a diagram corresponding to Fig. 4 according to a first modification. An exhaust gas purifying catalyst body 10A includes a catalyst layer 20A instead of the catalyst layer 20. The catalyst layer 20A has a multilayer structure in which two or more partial catalyst layers with different structures are stacked in a thickness direction. Specifically, in the catalyst layer 20A, a lower layer part 21 that exists on the base material 11 side and an upper layer part 22 that exists on a surface side of the catalyst layer 20A relative to the lower layer part 21 are stacked in the thickness direction. Here, the lower layer part 21 is provided in contact with the surface of the base material 11 and the upper layer part 22 is provided in contact with an upper surface of the lower layer part 21. Note that although the catalyst layer 20A has the two-layer structure in Fig. 5, the catalyst layer 20A may have a multilayer structure of three or more layers. For example, the catalyst layer 20Amay have an intermediate layer between the lower layer part 21 and the upper layer part 22, or the catalyst layer 20A may have another layer on the upper layer part 22.

In the catalyst layer 20A with the multilayer structure, one partial catalyst layer contains the exhaust gas purifying catalyst 100 and the other layers (in the case of the two-layer structure, the other partial catalyst layer) may contain an exhaust gas purifying catalyst other than the exhaust gas purifying catalyst 100. In one preferred example, the lower layer part 21 contains the exhaust gas purifying catalyst 100. On the other hand, the upper layer part 22 contains the exhaust gas purifying catalyst other than the exhaust gas purifying catalyst 100 (for example, the aforementioned optional exhaust gas purifying catalyst). Note that the lower layer part 21 and the upper layer part 22 may contain the optional component similarly to the catalyst layer 20.

In the diesel oxidation catalyst (DOC), the lower layer part 21 can function as an oxidation layer for NO that purifies NO included in the exhaust gas. Therefore, the lower layer part 21 preferably contains the exhaust gas purifying catalyst 100. The lower layer part 21 may further contain the alkaline-earth metal. On the other hand, the upper layer part 22 can function as an HC and/or CO oxidation layer that purifies HC and/or CO included in the exhaust gas. Therefore, the exhaust gas purifying catalyst included in the upper layer part 22 preferably contains Pt and/or Pd as the catalyst metal. The upper layer part 22 may further contain the alkaline-earth metal.

In the NOx storage reduction (NSR) catalyst, the lower layer part 21 can function as a NOx storing layer that stores NOx in the oxygen-excess atmosphere (lean condition). Therefore, the lower layer part 21 preferably contains the exhaust gas purifying catalyst 100. The lower layer part 21 preferably contains the NOx storing material described above additionally as the other additive component. On the other hand, when more fuel is injected (in a rich condition), the upper layer part 22 can function as a NOx reduction layer that purifies NOx using HC and CO as a reducing agent. Therefore, in some embodiments, the exhaust gas purifying catalyst included in the upper layer part 22 preferably contains Rh as the catalyst metal. In addition, in some other embodiments, the exhaust gas purifying catalyst included in the upper layer part 22 preferably contains Pt and/or Pd as the catalyst metal. The upper layer part 22 preferably contains the NOx storing material such as Ce additionally.

In the ammonia slip catalyst (ASC), the lower layer part 21 can function as an NH₃ oxidation layer. Therefore, the lower layer part 21 preferably contains the exhaust gas purifying catalyst 100. On the other hand, the upper layer part 22 can function as a selective catalytic reduction (SCR) catalyst layer. Therefore, the exhaust gas purifying catalyst included in the upper layer part 22 preferably contains a zeolite that carries Cu or Fe, or an oxide containing vanadium or tungsten as a catalyst component for SCR.

### <<Second modification>>

Fig. 6 is a diagram corresponding to Fig. 4 according to a second modification. An exhaust gas purifying catalyst body 10B includes a catalyst layer 20B instead of the catalyst layer 20A according to the first modification. The catalyst layer 20B has a structure in which two or more partial catalyst layers with different structures are arranged in the cylinder axis direction X. Specifically, the catalyst layer 20B includes a former stage part 23 existing on the upstream side X1 and a latter stage part 24 existing on the downstream side X2 relative to the former stage part 23 in the flowing direction of the exhaust gas. Here, the former stage part 23 is provided from the exhaust gas inlet 10a along the cylinder axis direction X and the latter stage part 24 is provided from the exhaust gas outlet 10b along the cylinder axis direction X.

Note that the catalyst layer 20B includes the former stage part 23 and the latter stage part 24 in Fig. 6; however, the catalyst layer 20B may include still another (third) catalyst layer. In Fig. 6, each of the former stage part 23 and the latter stage part 24 is formed in a part of the base material 11 that corresponds to 50% of the entire length L; however, the lengths of the respective layers in the cylinder axis direction X may be different from each other. Although the former stage part 23 and the latter stage part 24 are formed with the same thickness in Fig. 6, the thicknesses may be different from each other. In addition, although the former stage part 23 and the latter stage part 24 are formed in contact with the surface of the base material 11 in Fig. 6, a part of the former stage part 23 may be provided so as to cover an upper surface of the latter stage part 24, for example.

In the catalyst layer 20B, one partial catalyst layer contains the exhaust gas purifying catalyst 100 and the other layers (in the case of the two-layer structure, the other partial catalyst layer) may contain the exhaust gas purifying catalyst other than the exhaust gas purifying catalyst 100. In one preferred example, the latter stage part 24 contains the exhaust gas purifying catalyst 100. On the other hand, the former stage part 23 contains the exhaust gas purifying catalyst other than the exhaust gas purifying catalyst 100 (for example, the aforementioned optional exhaust gas purifying catalyst).

In the diesel oxidation catalyst (DOC), the latter stage part 24 can function as the oxidation layer for NO. The structure of the latter stage part 24 may be similar to that of the lower layer part 21 according to the first modification described above. In addition, the former stage part 23 can function as the oxidation layer for HC and/or CO. The structure of the former stage part 23 may be similar to that of the upper layer part 22 according to the first modification described above.

### <<Third modification>>

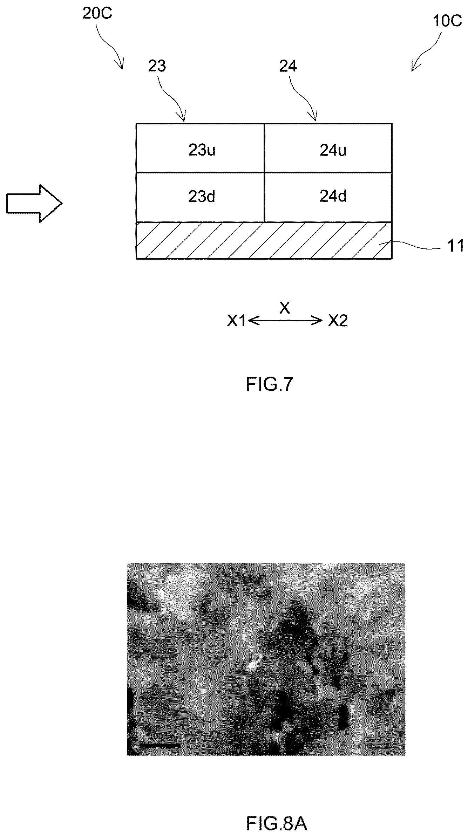

Fig. 7 is a diagram corresponding to Fig. 4 according to a third modification. An exhaust gas purifying catalyst body 10C includes a catalyst layer 20C instead of the catalyst layer 20B according to the second modification. Each of the former stage part 23 and the latter stage part 24 has a multilayer structure in which two or more partial catalyst layers with different structures are stacked in the thickness direction. However, the former stage part 23 and/or the latter stage part 24 may have a single-layer structure as described in the second modification. The former stage part 23 and/or the latter stage part 24 may have a multilayer structure of three or more layers. The former stage part 23 includes a former stage lower layer 23d and a former stage upper layer 23u formed on the former stage lower layer 23d here. The latter stage part 24 includes a latter stage lower layer 24d and a latter stage upper layer 24u formed on the latter stage lower layer 24d here.

In the catalyst layer 20C, one or more (for example, one) partial catalyst layers may contain the exhaust gas purifying catalyst 100 and the other layers may contain the exhaust gas purifying catalyst other than the exhaust gas purifying catalyst 100. In one preferred example, the latter stage lower layer 24d (for example, the latter stage lower layer 24d only) contains the exhaust gas purifying catalyst 100. On the other hand, one or more among the former stage lower layer 23d, the former stage upper layer 23u, and the latter stage upper layer 24u contain the exhaust gas purifying catalyst other than the exhaust gas purifying catalyst 100 (for example, the aforementioned optional exhaust gas purifying catalyst). The former stage lower layer 23d, the former stage upper layer 23u, and the latter stage upper layer 24u may contain the same exhaust gas purifying catalyst.

In the ammonia slip catalyst (ASC), the latter stage lower layer 24d can function as the NH₃ oxidation layer. The structure of the latter stage lower layer 24d may be similar to that of the lower layer part 21 according to the first modification described above, for example. In addition, each of the former stage lower layer 23d, the former stage upper layer 23u, and the latter stage upper layer 24u can function as the SCR catalyst layer. The structures of the former stage lower layer 23d, the former stage upper layer 23u, and the latter stage upper layer 24u may be similar to the structure of the upper layer part 22 according to the first modification described above, for example.

### <<Application of exhaust gas purifying catalyst body 10>>

The exhaust gas purifying catalyst body 10 can be used suitably for purifying the exhaust gas emitted from the internal-combustion engines of, in addition to vehicles such as an automobile and a truck, a motorcycle, and a bicycle with a motor, marine products such as a vessel, a tanker, a water bike, a personal watercraft, and an outboard motor, garden products such as a mowing machine, a chain saw, and a trimmer, leisure products such as a golf cart and a four-wheeled buggy, generator sets such as a cogeneration system, an incinerator, and the like. Especially, the exhaust gas purifying catalyst body 10 can be used suitably for vehicles such as automobiles, and particularly suitably for vehicles with the diesel engine.

Although Test Examples of the present invention will be described below, the present invention is not intended to be limited to these Test Examples.

### <<Test Example 1>>

### [Manufacture of parent materials 1 to 4, and 6]

Parent materials 1 to 4 used in Examples 1 to 4 and a parent material 6 used in Comparative Example 2 below were manufactured in accordance with the spray drying method. Specifically, first, zirconium oxynitrate as the zirconia precursor and alumina powder were put into a container according to the mass ratio shown in Table 1, and the mixture was stirred while pure water was added thereto. Thus, a suspension in which zirconium oxynitrate was dissolved and the alumina powder was dispersed was prepared. Note that the parent material 1 used alumina powder not containing lanthanum and the parent materials 2 to 4 used alumina powder containing lanthanum according to the mass ratio shown in Table 1. As the alumina powder, powder whose average particle diameter (D50) was in the range of 27 to 43 µm and pore volume was 0.3 to 0.55 ml/g was used.

Next, this suspension was jet into a hot wind as miniaturized liquid droplets using a nozzle-type spray drying device (ODT-8 manufactured by OHKAWARA KAKOHKI CO., LTD.) to vaporize the solvent instantly; thus, a particle in which zirconium oxynitrate adhered to a surface of the alumina powder was formed. Note that the conditions of the spray drying were an entry gas temperature of 200°C, an exit gas temperature of 110°C, and a pump flow rate of 20 ccm. Next, the obtained powder was dried at 120°C for eight hours in an electric furnace, and then sintered at 500°C for two hours. Thus, the parent materials 1 to 4 and 6 having zirconia on the surface of the alumina powder were obtained.

### [Preparation of parent material 5]

Alumina powder containing lanthanum according to the mass ratio shown in Table 1 was prepared as a parent material 5 used in Comparative Example 1 below. The parent material 5 is a parent material in which the surface of alumina is not covered with zirconia.

### [Manufacture of parent material 7]

In a parent material 7 used in Comparative Example 3 below, zirconia was disposed by coprecipitation on the surface of alumina. Specifically, first, the same zirconium oxynitrate and alumina powder as those above were put into a container according to the mass ratio shown in Table 1, and the mixture was stirred while pure water was added thereto. Thus, a suspension in which zirconium oxynitrate was dissolved and the alumina powder was dispersed was prepared. Next, ammonia water was added to this suspension for coprecipitation so that the suspension became alkaline. Subsequently, the precipitate was collected and dried at 200°C for two hours in the electric furnace and then sintered at 500°C for two hours. Thus, the parent material 7 having zirconia on the surface of the alumina powder was obtained.

### [Manufacture of parent materials 8 and 9]

Parent materials 8 and 9 used in Comparative Examples 4 and 5 below were manufactured by an evaporation drying method as disclosed in Patent Literature 2. Specifically, as for the parent material 8, first, commercial cerium nitrate butyrate was dissolved in pure water and then, the same alumina powder as that described above was added thereto and the mixture was stirred. Thus, a suspension in which cerium nitrate butyrate was dissolved and the alumina powder was dispersed was prepared. Next, this suspension was evaporated and dried at 120°C for eight hours in the electric furnace, and then sintered at 500°C for two hours. Thus, the parent material 8 having ceria on the surface of the alumina powder was obtained.

As for the parent material 9, first, commercial zirconium oxynitrate was dissolved in pure water and then, the same alumina powder as that described above was added thereto and the mixture was stirred. Thus, a suspension in which zirconium oxynitrate was dissolved and the alumina powder was dispersed was prepared. Next, this suspension was evaporated and dried at 120°C for eight hours in the electric furnace, and then sintered at 500°C for two hours. Thus, the parent material 9 having zirconia on the surface of the alumina powder was obtained.

### [Manufacture of parent material 10]

A parent material 10 used in Comparative Example 6 below was manufactured by an evaporation drying method as disclosed in Patent Literature 1. Specifically, first, commercial zirconia sol (ZrO₂ with an average particle diameter (D50) in the range of 60 to 80 nm) was diluted with pure water and then, the same alumina powder as that described above was added thereto and the mixture was stirred. Thus, a suspension in which the zirconium sol and the alumina powder were dispersed was prepared. Next, this suspension was dried at 120°C for eight hours in the electric furnace, and then sintered at 500°C for two hours. Thus, the parent material 10 having zirconia on the surface of the alumina powder was obtained.

### [Elemental analysis by XRF]

For the parent materials 1 to 10 manufactured as above, the composition ratio of ZrO₂, Al₂O₃, and La₂O₃ (mass%) was obtained using a fluorescence X-ray analysis device (XRF, Malvern Panalytical Axios manufactured by Spectris Co., Ltd.). Note that the measurement conditions were X-ray output: 2.4 kW, acceleration voltage: 30 kV, and current value: 80 mA, and the ratio was calculated by an FP method. The results are shown in Table 1.

### [Manufacture of exhaust gas purifying catalyst (Examples 1 to 4, Comparative Examples 1 to 6)]

The exhaust gas purifying catalysts were manufactured by having the parent materials 1 to 10 carry the catalyst precious metals. Specifically, first, the parent materials 1 to 10 (89.9 g) shown in Table 1 were dispersed in pure water, and then 1.0 g, in terms of Pt, of a dinitrodiammine platinum (II) nitrate solution was added thereto according to the mole ratio shown in Table 1. Thus, a suspension in which dinitrodiammine platinum was dissolved and the parent material was dispersed was prepared. Next, this suspension was dried in the electric furnace, and then sintered at 500°C for one hour. Thus, Pt was carried by the parent material and the exhaust gas purifying catalyst according to each Example was obtained.

### [FIB-SEM observation]

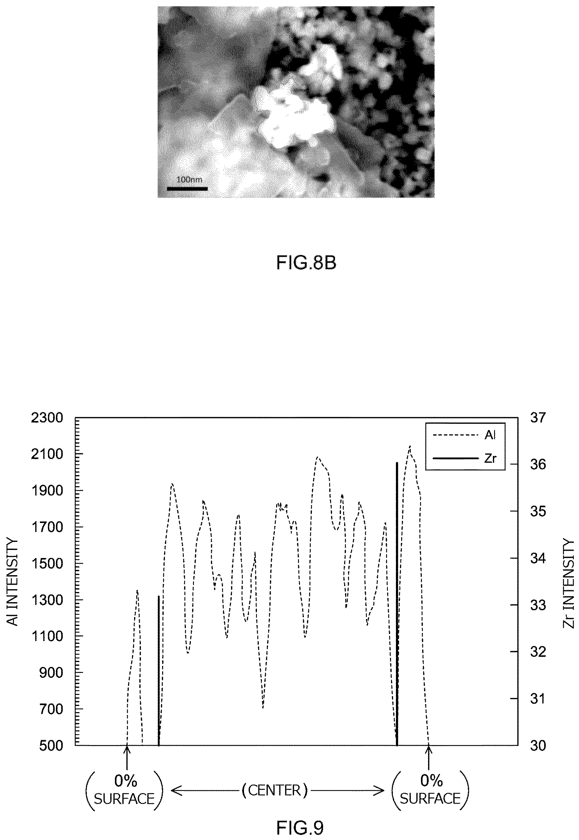

Among the exhaust gas purifying catalysts manufactured above, those of Examples 1 to 4 and Comparative Examples 2, 3, and 6 were observed with a focused ion beam scanning electron microscope (FIB-SEM, JXA-8530F manufactured by JEOL). The measurement conditions are acceleration voltage: 7 kV or 3 kV, current value: 0.4 nA, and WD: 4 mm. As one example, FIB-SEM observation images (measurement magnification: 300,000 times) of the exhaust gas purifying catalysts according to Example 2 and Comparative Example 6 are shown in Fig. 8A and Fig. 8B, respectively.

For example, as expressed in Fig. 8A, in Examples 1 to 4 and Comparative Example 2 in which the spray drying method was employed at the manufacture of the parent material (at the time of covering with zirconia), the observation with a measurement magnification of 300,000 times has indicated that the microscopic zirconia was disposed on the surface of the alumina particle. On the other hand, as expressed in Fig. 8B for example, in Comparative Examples 3 and 6 in which the conventional method such as coprecipitation or the evaporation drying method was employed, coarse zirconia was disposed on the surface of the alumina particle and the microscopic zirconia was hardly seen.

Next, six or more pieces of zirconia were optionally selected in the SEM observation image with a measurement magnification of 300,000 times and their equivalent circle diameters (i.e., Heywood diameters) where obtained. Then, the average value of the equivalent circle diameters (that is, the value of the average particle diameter of zirconia) was calculated. The results are shown in Table 1. Note that in Comparative Example 2, zirconia was not detected as particles in SEM and the calculation of the average particle diameter was difficult. It is considered that this is because the amount of microscopic zirconia dispersed on the surface of the alumina particle was not enough to be detected. Therefore, the equivalent circle diameter in Comparative Example 2 was estimated to be less than or equal to the detection limit (1 nm or less).

### [Line analysis by FE-EPMA]

Among the exhaust gas purifying catalysts manufactured as above, those of Examples 1 to 4 and Comparative Examples 2, 3, 5, and 6 containing zirconia were subjected to the quantitative line analysis of Zr using a field emission electron probe micro-analyzer (FE-EPMA, Helios G4UX manufactured by FEI). Specifically, first, the cross section of the alumina particle was obtained and a measurement sample was manufactured. Next, the upper limit of the intensity of "Al Level" was set to 3000 and a mapping image of Al was acquired using FE-EPMA. Then, a region in which the intensity of Al was 500 or more was defined as a region where the particles of the exhaust gas purifying catalyst existed.

Next, the upper limit of the intensity of "Zr Level" was set to 300 and the range where the intensity of Zr was 30 or more was set as the detection range. Subsequently, the region where the particles of the exhaust gas purifying catalyst existed was subjected to the quantitative line analysis of Zr using the diameter of the particle. As one example, a chart of the line analysis for the exhaust gas purifying catalyst according to Example 2 is shown in Fig. 9. In this chart, the diameter of the particle was calculated with the threshold of the Al intensity as 500, and its half was used as the radius (from the surface to the center). Next, with the threshold of the Zr intensity as 30, the position of Zr when the surface of the particle was 0% and the center was 100% was examined and the position corresponding to the percentage from the surface of the particle where the peak top of the Zr intensity existed was obtained. The results are shown in Table 1. Note that in Comparative Example 2, since the amount of added zirconia was small, the intensity of the Zr level was too small to determine the peak top. In addition, in Comparative Example 3 in which the manufacture employed the coprecipitation, the coarse zirconia was generated, so that the peak top position of zirconia appeared out of the range of the position of the alumina particle and the calculation of the peak top position of Zr to the position of the alumina particle failed.

### [Manufacture of exhaust gas purifying catalyst body (Examples 1 to 4, Comparative Examples 1 to 6)]

Using the manufactured exhaust gas purifying catalysts, exhaust gas purifying catalyst bodies were manufactured. Specifically, first, a honeycomb base material made of cordierite (total length: 2.5 cm, diameter Φ: 3 cm, volume: 0.0176 L, partition wall thickness: 6 mil, and the number of cells: 400 cpsi) was prepared as the base material.

Next, for each Example, 50 g of the manufactured exhaust gas purifying catalyst and 6 g of boehmite as the binder were added to 100 g of pure water and stirred, so that a slurry for catalyst layer formation was prepared. This slurry was applied on the base material by a wash coating method. In each Example, the coat quantity of the slurry was 98 g/L, Pt was used by 1.0 g/L, the parent material (the total of the alumina powder and zirconia) was used by 89.8 g/L, and the binder was used by 7.2 g/L. In Table 1, the content in terms of moles (g/L) and the mole ratio (zirconia/Pt) are shown together. Next, the base material to which the slurry adhered was dried in the electric furnace and then, sintered at 500°C for one hour. In this manner, the catalyst layer containing the exhaust gas purifying catalyst was provided on the base material and the exhaust gas purifying catalyst body according to each Example was obtained.

### [Evaluation of durability (measurement of CO-T50)]

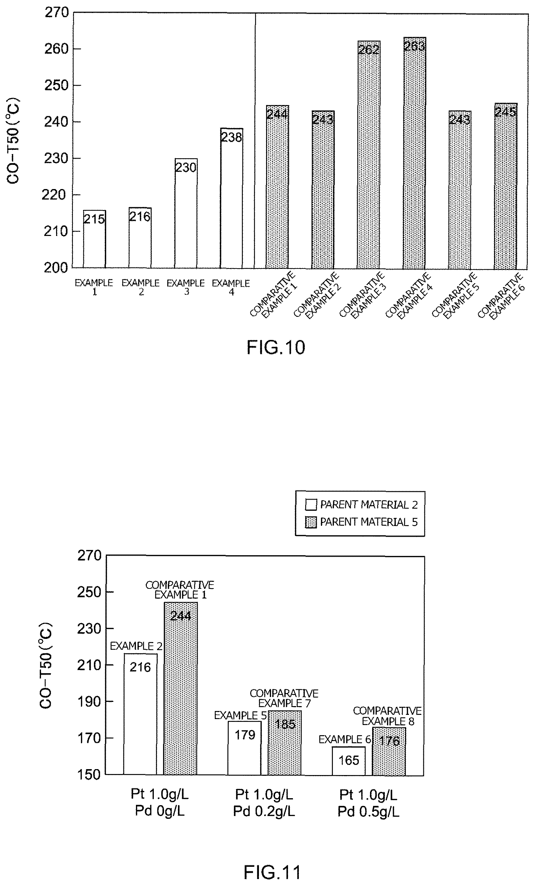

First, the exhaust gas purifying catalyst body according to each Example (volume: 0.018 L) was set in a chamber-type electric furnace and thermally processed at 750°C for 50 hours under an air atmosphere, that is, an endurance process was performed. After that, the exhaust gas purifying catalyst body after the endurance process was set in an activity evaluation device. Then, while a model gas containing the following components was supplied into the device at a flow rate of 14.8 L/min, the temperature was increased from 100°C to 500°C at a temperature increase rate of 20 °C/min. At this temperature increase, the temperature at which a CO purifying ratio reached 50% (CO 50% purifying temperature: CO-T50) was measured. The results are shown in Table 1 and Fig. 10.

### <Components of model gas>

- CO: 800 ppm
- C₃H₆: 3000 ppmC
- NO: 200 ppm
- O₂: 8%
- CO₂: 7%
- H₂O: 7%

### [Table 1]

**Table 1**

| | | | | | | | | | | | | | | |
|---|---|---|---|---|---|---|---|---|---|---|---|---|---|---|
| Exhaust gas purifying catalyst body | Parent material | Covering method for zirconia | Composition ratio (mass%) | | | ZrO₂ /Pt | Zr intensity Peak top position (%)*¹ | ZrO₂ average particle diameter (nm)*² | Exhaust gas purifying catalyst body Precious metal | | | | | |
| | | | ZrO₂ | Alumina powder | | | | | ZrO₂ (g/L) | Catalyst precious metal | | (In tems of mole) | | Activity evaluation |
| | | | | Al₂O₃ | La₂O₃ | | | | | **Pt** (g/L) | **Pd** (g/L) | ZrO₂ (mol/L) | Pt (mol/L) | CO-T50 (° C) |
| Example 1 | Parent material 1 | Spray drying | 5.5 | 94.5 | 0.0 | 8 | 23.3 | 20.5 | 4.9 | 1.0 | 0.0 | 0.04 | 0.005 | 215 |
| Example 2 | Parent material 2 | Spray drying | 5.6 | 90.2 | 4.2 | 8 | 22.1 | 19.4 | 5.0 | 1.0 | 0.0 | 0.04 | 0.005 | 216 |
| Example 3 | Parent material 3 | Spray drying | 9.4 | 85.9 | 4.7 | 13 | 4.9 | 36.0 | 8.4 | 1.0 | 0.0 | 0.07 | 0.005 | 230 |
| Example 4 | Parent material 4 | Spray drying | 20.1 | 75.9 | 4.0 | 29 | 6.9 | 46.0 | 18.0 | 1.0 | 0.0 | 0.15 | 0.005 | 238 |
| Comparative Example 1 | Parent material 5 | (No covering) | 0.0 | 96.0 | 4.0 | - | - | - | 0.0 | 1.0 | 0.0 | 0.00 | 0.005 | 244 |
| Comparative Example 2 | Parent material 6 | Spray drying | 1.1 | 94.8 | 4.1 | 2 | N.D. | N.D. (< 1) | 1.0 | 1.0 | 0.0 | 0.01 | 0.005 | 243 |
| Comparative Example 3 | Parent material 7 | Coprecipitation | 15.0 | 82.7 | 2.3 | 21 | N.D. | 4839 | 13.5 | 1.0 | 0.0 | 0.11 | 0.005 | 262 |
| Comparative Example 4 | Parent material 8 | Ce nitrate evaporation and drying | (5.0)* | 95.0 | 0.0 | - | - | - | - | 1.0 | 0.0 | - | 0.005 | 263 |
| Comparative Example 5 | Parent material 9 | Zr oxynitrate evaporation and drying | 40 | 57.6 | 2.4 | 57 | 86.5 | - | 35.9 | 1.0 | 0.0 | 0.29 | 0.005 | 243 |
| Comparative Example 6 | Parent material 10 | Zr sol evaporation and drying | 5.0 | 95.0 | 0.0 | 7 | 75.0 | 161.7 | 4.5 | 1.0 | 0.0 | 0.0 | 0.005 | 245 |

| | | | | | | | | | | | | | | |
|---|---|---|---|---|---|---|---|---|---|---|---|---|---|---|
| *CeO₂ *1: based on FE-EPMA *2: based on FIB-SEM | | | | | | | | | | | | | | |

As shown in Table 1 and Fig. 10, in Comparative Example 2 in which the mole ratio (zirconia/Pt) was less than 8, the CO 50% purifying temperature after the 50-hour endurance process was substantially the same as that in Comparative Example 1 in which covering with zirconia was not performed; thus, the effect of covering with zirconia was not recognized. In addition, in Comparative Example 3, the CO 50% purifying temperature was poor compared to that in Comparative Example 1 in which covering with zirconia was not performed. It is considered that this is because the particle diameter of zirconia was large so that the contact points with alumina were fewer and the change in alumina acid property was small, and moreover, the ratio of Pt carried by the aggregated zirconia (Pt with low activity) increased, for example.

In addition, in Comparative Example 5 according to Patent Literature 2 and Comparative Example 6 according to Patent Literature 1, the CO 50% purifying temperature was substantially the same as that in Comparative Example 1 in which covering with zirconia was not performed, and the effect of covering with zirconia was not exerted sufficiently. It is considered that this is because, in the case where zirconium oxynitrate adhered by the evaporation drying method, zirconia was disposed entirely on the surface of, and on the inside of the alumina particle; therefore, the amount of zirconia disposed on the surface of the alumina particle decreased and the change in acid property on the surface of the particle with the high gas contact probability was small. In addition, it is considered that in the case where the zirconia sol was evaporated and dried, the amount of zirconia disposed on the surface was small and moreover, the particle diameter of zirconia disposed on the surface increased; therefore, the number of contact points with the alumina particle on the particle surface decreased and the change in acid property on the surface of the particle with the high gas contact probability was small.

Moreover, in Comparative Example 4 according to Patent Literature 2, the CO 50% purifying temperature was poor compared to Comparative Example 1 in which covering with zirconia was not performed. Accordingly, even if the additive element is ceria, it is considered that the effect was not exerted sufficiently because of the reason similar to that in Comparative Examples 5 and 6.

In contrast to these Comparative Examples 1 to 6, in Examples 1 to 4 in which zirconia with an average particle diameter of 50 nm or less, which was smaller than before, was contained so that the mole ratio (zirconia/Pt) became 8 or more, the CO 50% purifying temperature clearly improved. In particular, in Examples 1 to 3 in which the average particle diameter of zirconia was 40 nm or less and Examples 1 and 2 in which the average particle diameter of zirconia was 25 nm or less, the CO 50% purifying temperature remarkably improved. These results indicate the significance of the art disclosed herein.

### <<Test Example II>>

### [Manufacture of exhaust gas purifying catalyst body (Examples 5 to 7, Comparative Examples 7 to 9)]

In Examples 5 and 6 and Comparative Examples 7 and 8, Pd was used in addition to Pt as the catalyst precious metal. That is to say, in Examples 5 and 6 and Comparative Examples 7 and 8, the parent materials 2 and 5 (89.9 g) shown in Table 1 were dispersed in pure water, 1.0 g, in terms of Pt, of the dinitrodiammine platinum (II) nitrate solution was added and additionally, 0.2 g or 0.5 g, in terms of Pd, of a palladium nitrate solution was added thereto. The exhaust gas purifying catalysts and the exhaust gas purifying catalyst bodies using these were manufactured and evaluated in a manner similar to the above Test Example I except the aforementioned process. The evaluation results of the CO 50% purifying temperature are shown in Table 2 and Fig. 11.

### [Table 2]

**Table 2**

| Exhaust gas purifying catalyst body | Parent material | Catalyst precious metal | | In terms of moles | | | Activity evaluation |
|---|---|---|---|---|---|---|---|
| | | Pt (g/L) | Pd (g/L) | ZrO₂ (mol/L) | Pt (mol/L) | ZrO₂ /Pt | CO-T50 (° C) |
| Example 2 | Parent material 2 | 1.0 | 0.0 | 5.0 | 0.005 | 8 | 216 |
| Example 5 | Parent material 2 | 1.0 | 0.2 | 5.0 | 0.005 | 8 | 179 |
| Example 6 | Parent material 2 | 1.0 | 0.5 | 5.0 | 0.005 | 8 | 165 |
| Comparative Example 1 | Parent material 5 | 1.0 | 0.0 | 0.0 | 0.005 | - | 244 |
| Comparative Example 7 | Parent material 5 | 1.0 | 0.2 | 0.0 | 0.005 | - | 185 |
| Comparative Example 8 | Parent material 5 | 1.0 | 0.5 | 0.0 | 0.005 | - | 176 |

As shown in Table 2 and Fig. 11, the CO 50% purifying temperature in Examples 5 and 6 was higher than that in Comparative Examples 7 and 8. Therefore, it has been understood that even when Pd was used in addition to Pt as the catalyst precious metal, the effect of the art disclosed herein can be exerted suitably. Although the details are omitted, the improvement width of the CO 50% purifying temperature was relatively small when only Pd was used instead of Pt as the catalyst precious metal. Therefore, it has been understood that the effect of the art disclosed herein can be exerted particularly remarkably when the catalyst precious metal contains at least Pt.

Although the embodiments of the present invention have been described above, each of the above-described embodiments is merely one example. The present invention can be carried out in various modes. The present invention can be carried out based on the contents disclosed in this specification and technical common sense in the field. The techniques described in the scope of claims include those in which the specific embodiments exemplified above are variously modified and changed.

### [Reference Signs List]

1 Exhaust gas purifying system
2 Internal-combustion engine
3 Exhaust gas purifying device
10 First catalyst body (exhaust gas purifying catalyst body)
11 Base material
20 Catalyst layer
30 Parent material
32 Alumina particle
34 Zirconia
40 Catalyst precious metal
100 Exhaust gas purifying catalyst

## Claims

1. An exhaust gas purifying catalyst comprising:
a parent material including an alumina particle and zirconia that covers at least a part of a surface of the alumina particle; and
a catalyst precious metal carried by the parent material and containing at least Pt, wherein
an average particle diameter of the zirconia that is obtained by a focused ion beam scanning electron microscope is 50 nm or less, and
a mole ratio (ZrO₂/Pt) of the zirconia to the Pt is 8 or more.

2. The exhaust gas purifying catalyst according to claim 1, wherein when quantitative line analysis of Zr is performed using a field emission electron probe micro-analyzer from the surface of the alumina particle toward a center and a depth from the surface to the center is expressed with the surface defined as 0% and the center defined as 100%, a peak top of Zr intensity is within a range of 0 to 30%.

3. The exhaust gas purifying catalyst according to claim 1 or 2, wherein a mass ratio of the zirconia in the parent material is 5 mass% or more and 30 mass% or less.

4. The exhaust gas purifying catalyst according to claim 1 or 2, wherein the mole ratio (ZrO₂/Pt) is 30 or less.

5. The exhaust gas purifying catalyst according to claim 1 or 2, wherein the catalyst precious metal does not contain Rh.

6. An exhaust gas purifying catalyst body comprising a base material and a catalyst layer provided on the base material, wherein the catalyst layer contains the exhaust gas purifying catalyst according to claim 1 or 2.

7. The exhaust gas purifying catalyst body according to claim 6, wherein
the catalyst layer includes a lower layer part existing on a side of the base material, and an upper layer part existing on a side of a surface of the catalyst layer,
the lower layer part contains the exhaust gas purifying catalyst according to claim 1 or 2, and
the upper layer part contains an exhaust gas purifying catalyst different from the exhaust gas purifying catalyst in the lower layer part.

8. The exhaust gas purifying catalyst body according to claim 6, wherein
the catalyst layer includes a former stage part existing on an upstream side of the catalyst layer and a latter stage part existing on a downstream side of the catalyst layer in a flowing direction of exhaust gas,
the latter stage part contains the exhaust gas purifying catalyst according to claim 1 or 2, and
the former stage part contains an exhaust gas purifying catalyst different from the exhaust gas purifying catalyst in the latter stage part.
